# EUROPEAN PATENT APPLICATION

(11) **EP 2 876 808 A2**
(43) Date of publication of application: **27.05.2015**
(21) Application number: 14193938.9
(22) Date of filing: 19.11.2014
(51) Int. Cl.: H02P 9/10, H01H 9/54, H02H 9/00

(54) **Power generation system and method with fault ride-through capability**

(30) Priority: 20.11.2013 US 201314085392
(71) Applicant: General Electric Company, Schenectady, New York 12345 (US)
(72) Inventor: Panosyan, Ara, Niskayuna, New York 12309 (US); El-Barbari, Said Farouk Said, Niskayuna, New York 12309 (US); Schroeder, Stefan, Niskayuna, New York 12309 (US)
(74) Representative: Cleary, Fidelma

(57) **Abstract**

A power generation system (40) includes a generator (42) mechanically coupled to an engine (60) to generate electrical power and a fault ride through system (46) connected between the generator (42) and a power grid (44). The fault ride through system (46) includes a mechanical switch (54) connected in parallel with a solid state switch (52) and a controller (56) for controlling the mechanical switch (54), the solid state switch (52) and ignition of the engine (60) in coordination.

## Description

### BACKGROUND

This invention relates generally to electric energy conversion, and, more specifically, to a system and a method for fault ride through capability of small generator sets with low moments of inertia connected to an electric power grid.

In traditional electric power systems, most of the electrical power is generated in large centralized facilities, such as fossil fuel (coal, gas powered), nuclear, or hydropower plants. These traditional plants have excellent economies of scale but usually transmit electricity long distances and can affect the environment. Distributed energy resource (DER) systems are small power generator sets (typically in the range of 3 kW to 10,000 kW) used to provide an alternative to or an enhancement of traditional electric power systems. Small power generator sets may be powered by small gas engines, diesel engines and/or wind turbines, for example. DER systems reduce the amount of energy lost in transmitting electricity because the electricity is generated very close to where it is used. DER systems also reduce the size and number of power lines that must be constructed. However, due to increased trend towards distributed power generation using small generator sets, many grid codes are requiring small generator sets to provide enhanced capabilities such as fault voltage ride through.

When a fault in the electric power system occurs, voltage in the system could drop by a significant amount for a short duration (typically less than 500 milliseconds) until the fault is cleared. Faults can be caused by at least one phase conductor being connected to ground (a ground fault) or by the short circuiting of two or multiple phase conductors. These types of faults can occur during lightning and wind storms, or due to a transmission line being connected to the ground by accident. The fault may result in significant voltage drop events. In the past, under these inadvertent fault and large power disturbance circumstances, it has been acceptable and desirable for small generator sets to trip off line whenever the voltage drop occurs. Operating in this way has no real detrimental effect on the supply of electricity when penetration level of small power generator sets is low. However, as penetration of small generator sets in the electric power system increases, it is desirable for these small generator sets to remain on line and ride through such a low voltage condition and to stay synchronized with the electric grid, to be able to continue supplying power to the grid after the fault is cleared. This is similar to the requirements applied to large power generator sets.

Therefore, it is desirable to determine a method and a system that will address the foregoing issues.

### BRIEF DESCRIPTION

In accordance with an embodiment of the present technique, a power generation system is provided. The power generation system includes a generator mechanically coupled to an engine to generate electrical power. The power generation system also includes a fault ride through system connected between the generator and a power grid. The fault ride through system includes a mechanical switch connected in parallel with a solid state switch and a controller for controlling the mechanical switch, the solid state switch and ignition of the engine in coordination.

In accordance with another embodiment of the present technique, a method of supplying electrical power to a power grid from a power generation system is provided. The power generation system includes a fault ride through system connected between the generator and the power grid where the fault ride through system includes a mechanical switch connected in parallel with a solid state switch. The method includes controlling the mechanical switch to open when a fault is detected and to close the mechanical switch if the fault is cleared before a predetermined time and providing a bypass path for a generator current via the solid state switch after the mechanical switch is opened. The method also includes controlling ignition of an engine coupled to the generator in coordination with the solid state switching.

### DRAWINGS

These and other features, aspects, and advantages of the present invention will become better understood when the following detailed description is read with reference to the accompanying drawings in which like characters represent like parts throughout the drawings, wherein:
FIG. 1 is a plot of a grid code defined voltage profile right before, during and right after a fault;
FIG. 2 is a diagrammatical representation of a power generation system connected to an electric power grid and utilizing a fault ride through system according to aspects of the present disclosure; and
FIGs. 3(a)-3(e) are diagrammatical representations of various stages of fault ride through operation according to aspects of the present disclosure.

### DETAILED DESCRIPTION

As discussed in detail below, embodiments of the present invention function to provide a system and a method for fault ride through capability of small power generator sets with low moments of inertia connected to a power grid.

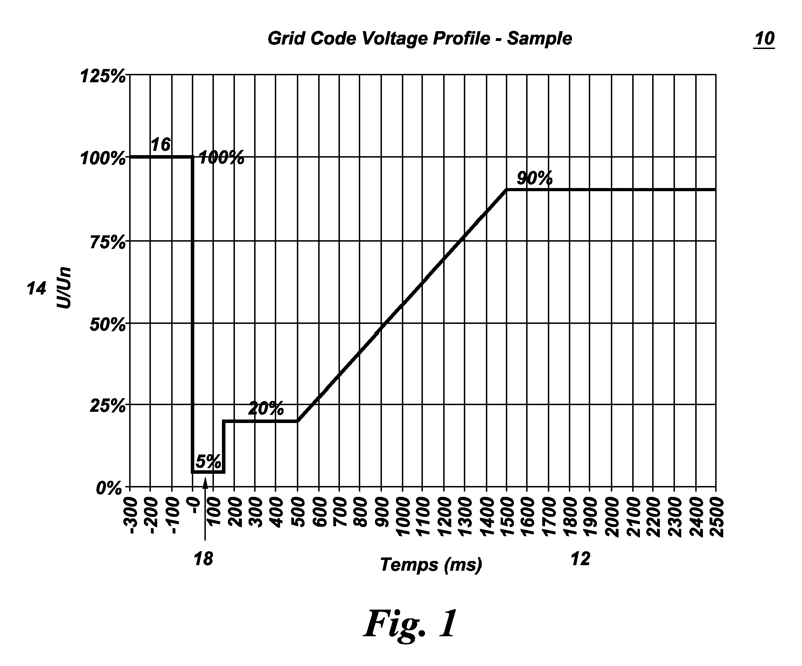

FIG. 1 illustrates a plot 10 of an example of a grid code voltage profile at the point of connection (POC) of a generator to the power grid. Some of the grid authorities expect that the generators should not be disconnected from the grid if the voltage at POC is higher than the voltage profile shown. However, this is one exemplary case, and the voltage profile requirement may vary from country to country or from grid authority to grid authority. The plot 10 shows a horizontal axis 12 representing time in milliseconds and a vertical axis 14 representing voltage in percentage of the nominal voltage. The fault occurs at 0 milliseconds. Before the fault, the system is in stable condition, so the pre-fault voltage 16 at POC i.e. before 0 milliseconds is 100% or 1 per unit. Due to a fault in the grid, the voltage 18 at 0 milliseconds drops down to as low as 5% at the beginning of the fault. It should be noted that the voltage drop at the POC depends on the distance of fault to POC, the fault impedance, the type of fault, the grid characteristics and so forth. In one embodiment, the voltage may be lower than 5 %, or in another embodiment; the voltage may be greater than 5%.

When the voltage falls to levels as illustrated in FIG. 1, it is likely that the generator is not able to export full power to the grid during the low voltage condition. If at the same time the prime mover continues to deliver constant mechanical power to the generator, this will result in acceleration of the engine-generator rotating masses, and the rotor speed will increase. The increase of the rotor speed will result in excessive increase of the synchronous generator rotor angle, which may lead to a loss of synchronism. Therefore, the generator will trip and not fulfill the grid code requirement.

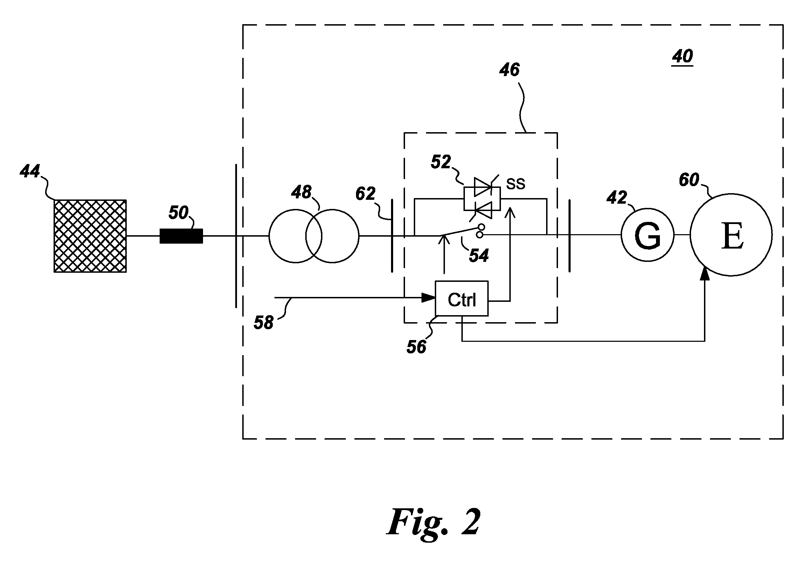

FIG. 2 shows a power generation system 40 connected to an electric power grid 44 utilizing a fault ride through system 46 in accordance with an embodiment of the present invention. Power generation system 40, comprises a prime mover 60 and a generator 42 which is connected to the power grid 44. In one embodiment, generator 42 is of a small power rating for example, less than 10 MW. Further, the generator is mechanically coupled to prime mover 60, which could be a turbine or engine. In one embodiment, engine 60 comprises a gas turbine or a gas engine or a wind turbine. In some embodiments, generator 42 will be coupled to power grid 44 through a power electronic converter (not shown), and in other embodiment generator 42 will be coupled to power grid 44 without any power electronic converter. Generator 42 is connected to power grid 44 via a fault ride through system 46, a transformer 48, and a transmission line 50. It should be noted that the arrangement shown in FIG. 2 is only for exemplary purpose and in another embodiment; fault ride through system 46 may be connected between transformer 48 and power grid 44. It should be noted that the FIG. 2 shows a single line diagram of the power grid system for ease of illustration. The fault ride through system 46 includes a solid state switch 52, a mechanical switch 54 and a controller 56. Fault ride through system 46 is connected in series with generator 42 whereas solid state switch 52 and the mechanical switch 54 are connected in parallel with each other. In one embodiment, solid state switch 52 may comprise an integrated gate commutated thyristor (IGCT), insulated gate bipolar transistor (IGBT) or Triode for Alternating Current (TRIAC). The controller 56 receives an input signal 58 and provides control signals to solid state switch 52, mechanical switch 54 and engine 60. In one embodiment, the input signal 58 comprises a voltage signal or a current signal or a generator power signal or a speed signal or a rotor angle signal or an engine power or an engine torque or any combinations thereof. The controller uses the input signal to determine whether a fault has occurred on the system or not and provides control signals to control the operation of engine 60, solid state switch 52 and mechanical switch 54 in event of the fault.

In operation, during normal conditions mechanical switch 54 is in a conducting or ON state whereas solid state switch 52 is in a non-conducting or OFF state. When there is a fault in the grid at a location close to the point of connection 62, the voltage at the point of connection 62 of the generator drops significantly. If the low voltage condition at the POC continues for a threshold time, generator 42 may be subjected to extremely high currents due to the large angle between a generator rotor and the grid. The generator would therefore disconnect from the grid to protect itself from these high currents. The growing angle between generator rotor and the grid could also lead to loss of synchronism between the generator and the grid, which will also require disconnecting the generator from the grid. However, to fulfill the grid code fault ride through requirements, the generator should be able to stay connected to the grid and continue supplying power to the grid after the fault is cleared and the voltage at the POC recovers to pre fault levels. In other words, during a fault condition the generator speed and rotor angle should stay within acceptable limits, as long as the voltage at the POC is above the voltage profile given by the grid code.

When a voltage drop at the POC due to a fault event in the power grid is detected by controller 56, it triggers engine 60 connected to generator 42 to reduce power (e.g., switch off engine ignition partially or fully) so as to reduce or stop generator 42 from accelerating, due to the limited electric power that the generator can supply to the grid during low voltage conditions at the POC. If the fault does not clear in a predetermined time and the generator comes to a standstill, then generator 42 would need to be disconnected from grid 44 otherwise generator 42 may be subjected to extremely high currents due to the large angle between a generator rotor and the grid. In one embodiment, the predetermined time is decided by an operator based on grid code requirements and is generally a required maximum duration for fault voltage ride through. Mechanical switch 51 needs a breaking time before it can open and disconnect generator 42 from grid 44. Thus, controller 56, triggers opening (i.e., OFF state) of mechanical switch 54 before the predetermined time. In one embodiment, mechanical switch 56 is trigged to open at a time which may be equal to or greater than the breaking time of mechanical switch 54 before the predetermined time. For example, assume that the breaking time of mechanical switch 54 is 70 msec and the predetermined time is 150 msec then mechanical switch 54 is triggered to close before or at 80 msec. Thus, at the predetermine time (150 msec), mechanical switch 54 is completely turned off and may not provide any connection between generator 42 and grid 44. However, solid state switch 52, which can switch on faster than mechanical switch 54, is triggered to conduct before mechanical switch 54 opens and thus provides a connection or a bypass path for the power flow between generator 42 and grid 44. In one embodiment, a switch on and a switch off time of solid state switch may be few µsec to about 20 msec depending in the type of solid state switches used. For example, in the previous example, the solid state switch 52 is triggered to switch on before or at 130 msec, so the solid state switch 52 starts conducting the current before the mechanical switch 54 opens. A certain time buffer between the actual closing time of the solid-state switch 52 and the actual opening time of the mechanical switch 54 is considered to avoid opening the circuit due to switch jitter.

If controller 56 determines that the fault is cleared within a predetermined time and the voltage at the POC is back to acceptable level at which the generator can supply power to the grid, the engine ignition is switched back on, if still partially or fully off, and the mechanical switch 54 is triggered to be switched ON. Once mechanical switch 54 is switched on completely solid state switch 52 is opened and thus, normal operation or pre-fault condition is restored. However, if the fault is not cleared within the predetermined time then engine 60, mechanical switch 54 and solid state switch 52 are switched OFF eventually resulting in no power supplied by generator 42 to power grid 44.

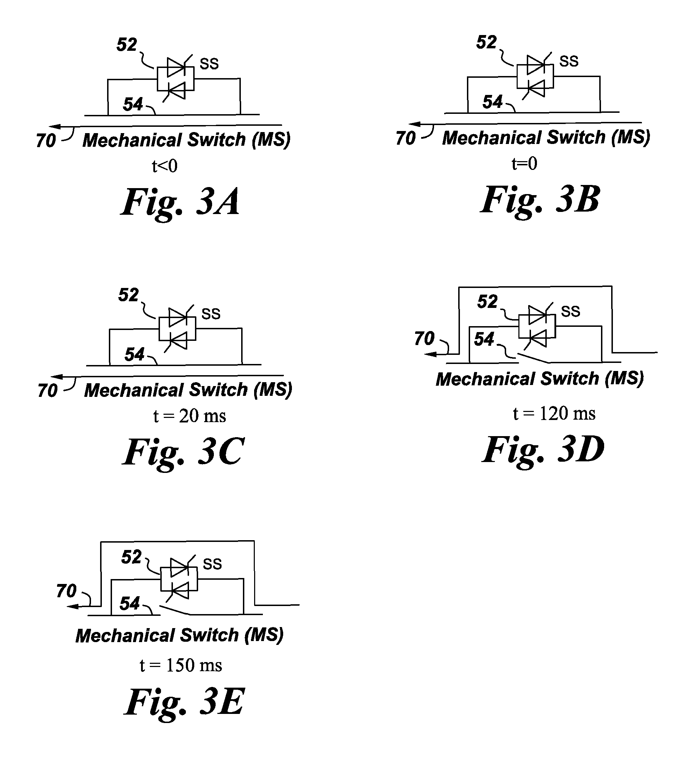

FIGs. 3(a)-3(e) show various stages of fault ride through operation according to aspects of the present disclosure. Fig. 3(a) shows a normal condition or no fault condition (t<0) where only mechanical switch 54 is conducting and solid state switch 52 is not conducting. During this stage, a generator current 70 flows only through mechanical switch 54 and not through solid state switch 52. At t=0 (Fig. 3(b)), a fault event occurs in the grid and at t=20ms (Fig. 3(c)), the fault event is detected by the fault ride through system. In one embodiment, the fault event may be detected based on the voltage signal, current signal, speed signal, power signal, torque signal or rotor angle signal or any combinations thereof. As can be seen in Fig. 3(b) and Fig. 3(c), during these stages, generator current 70 still flows through mechanical switch 52 because control actions haven't been initiated. It should be noted that the timings shown here (i.e., t=0, 20, 120 ms etc.) are only for illustrative purposes and in other embodiments, the timings may be based on system and control parameters. Furthermore, at t=20ms when the fault event is detected by the fault ride through system, a first control signal is sent to the generator engine so as to partially or fully switch off its ignition. Simultaneously or after a short while, a second control signal is sent to mechanical switch 54 to open it. A third control signal to switch on solid state switch 52 may also be sent at t=20ms or with some delay, since a switch on time of solid state switch 52 is much shorter compared to a switch off time of mechanical switch 54. A certain time buffer between the actual closing time of the solid-state switch 52 and the actual opening time of the mechanical switch 54 is considered to avoid opening the circuit due to switch jitter. During the transition period, generator current 70 may flow both through solid state switch 52 and mechanical switch 54. When the mechanical switch 54 is switched off and the solid state switch 52 is switched on, the generator current 70 flows only through solid state switch 52 and not through mechanical switch 54.

If the fault is cleared within a predetermined time, e.g. at t=120ms (Fig. 3(d)), and the voltage at the POC is back to acceptable level at which the generator can supply power to the grid, the engine ignition is switched on back to the pre fault power level, if still partially or fully off, and the mechanical switch 54 is triggered to be switched ON. When mechanical switch 54 is in ON state, solid state switch 52 is placed in OFF position by controller 56, bringing the fault ride through system 46 back to its initial state during normal conditions before the fault event.

If the fault is not cleared within the predetermined time, e.g. at t=150ms (Fig. 3(e)), and the voltage at the POC is below the voltage profile given by the grid code then the engine ignition is triggered to be fully switched off and solid state switch 52 is switched off, resulting in both mechanical switch 54 and solid state switch 52 being in non-conducting state. The generator is thus quickly disconnected from power grid 44, eventually resulting in no power supplied by generator 42 to power grid 44.

One of the advantages of the present technique is enabling the generator to immediately disconnect from the power grid if the fault is not cleared at the end of the predetermined time. For example, in a conventional technique, where only a mechanical switch is utilized, the mechanical switch would be in a closed position till the predetermined time (e.g., t=150ms) and if the fault is not cleared within the predetermined time then the mechanical switch is triggered to open at t=150ms. However, the mechanical switch then may take a minimum breaking time (e.g., 70ms) to open completely. This would result in the generator being subjected to extremely high currents due to the large angle between a generator rotor and the grid even if engine ignition is switched off. On the contrary, in the present technique since the solid state switch which has significantly lower turn off time (few µsec to about 20ms) is connected in parallel with the mechanical switch, the solid state switch can quickly disconnect the generator from the grid as discussed in Fig. 3(e) preventing the generator being subjected to extremely high currents.

While only certain features of the invention have been illustrated and described herein, many modifications and changes will occur to those skilled in the art. It is, therefore, to be understood that the appended claims are intended to cover all such modifications and changes as fall within the true spirit of the invention.

## Claims

1. A power generation system (40) comprising:
a generator (42) mechanically coupled to an engine (60) to generate electrical power;
a fault ride through system (46) connected between the generator (42) and a power grid (44), the fault ride through system (46) comprising:
a mechanical switch (54) connected in parallel with a solid state switch (52); and
a controller (56) for controlling the mechanical switch (54), the solid state switch (52) and ignition of the engine (60) in coordination.

2. The system of claim 1, wherein the controller (56) is configured to generate a first control signal to control the ignition of the engine (60), a second control signal to control the mechanical switch (54) and a third control signal to control the solid state switch (52).

3. The system of claim 2, wherein the controller (56) is configured to generate the first control signal to partially or fully switch off the ignition of the engine (60) when a grid fault condition is detected.

4. The system of claim 3, wherein the controller (52) is configured to generate the second control signal to open the mechanical switch (54) when the grid fault condition is detected and the third control signal to close the solid state switch (52) before the mechanical switch (54) is opened to provide a bypass path when the mechanical switch (54) is open.

5. The system of claim 4, wherein the controller (56) is configured to switch on the mechanical switch (54) and switch (52) off the solid state switch if the fault condition is cleared before the predetermined time.

6. The system of claim 5, wherein the controller (56) is configured to keep the mechanical switch (54) and the solid state switch (52) in a non-conducting state if the fault condition is not cleared after the predetermined time and the generator (60) comes to a standstill.

7. The system of any of claims 3 to 6, wherein the controller (56) is configured to detect the fault condition based on an input signal (58).

8. The system of claim 7, wherein the controller (56) controls the engine ignition based on the input signal (58).

9. The system of claim 7 or 8, wherein the input signal (58) comprises one of a voltage signal or a current signal or a generator power signal or a speed signal or a rotor angle signal or an engine power or an engine torque or any combinations thereof.

10. A method of supplying electrical power to a power grid (44) from a power generation system (40) comprising a fault ride through system (46) connected between the generator (42) and the power grid (44), the fault ride through system (46) comprising a mechanical switch (54) connected in parallel with a solid state switch (52), the method comprising:
controlling the mechanical switch (54) to open when a fault is detected and to close the mechanical switch (54) if the fault is cleared before a predetermined time;
providing a bypass path for a generator current via the solid state switch (52) after the mechanical switch is opened; and
controlling ignition of an engine (60) coupled to the generator (42) in coordination with the solid state switching.

11. The method of claim 10, further comprising partially or fully switching off the ignition of the engine (60) for a specified time when the fault is detected.

12. The method of claim 11, comprising switching off the solid state switch (52) if the fault condition is cleared before the predetermined time.

13. The method of claim 12, further comprising switching off the mechanical switch (54) and the solid state switch (52) if the fault is not cleared after the predetermined time and the generator (60) comes to a standstill.

14. The method of claim 12 or 13, wherein the fault is detected based on an input signal (58).

15. The method of claim 14, wherein the engine ignition is controlled based on the input signal (58).
